# EUROPÄISCHE PATENTSCHRIFT

(11) **EP 1 832 132 B1**
(45) Veröffentlichungstag und Bekanntmachung des Hinweises auf die Patenterteilung: **06.04.2011**
(21) Anmeldenummer: 05826427.6
(22) Anmeldetag: 12.12.2005
(51) Int. Cl.: H04W 8/24

(54) **SYSTEM UND VERFAHREN ZUR VERMITTLUNG VON DATEN ZWISCHEN EINEM DATENANBIETER UND EINEM MOBILFUNKENDGERÄT**
SYSTEM AND METHOD FOR DELIVERING DATA BETWEEN A DATA PROVIDER AND A MOBILE TERMINAL
SYSTEME ET PROCEDE PERMETTANT LA DELIVRANCE DE DONNEES ENTRE UN FOURNISSEUR DE DONNEES ET UN TERMINAL MOBILE

(30) Priorität: 28.12.2004 DE 102004063688
(43) Veröffentlichungstag der Anmeldung: 12.09.2007
(73) Patentinhaber: Vodafone Holding GmbH, 40213 Düsseldorf (DE)
(72) Erfinder: TROMM, Achim, 40235 Düsseldorf (DE)
(74) Vertreter: Weisse, Renate
(86) Internationale Anmeldenummer: PCT/EP2005/056696
(87) Internationale Veröffentlichungsnummer: WO 2006/069909

(56) Entgegenhaltungen:
- WO-A-01/35622
- WO-A-97/41654
- WO-A-02/102016
- WO-A-03/105444
- GB-A- 2 359 908
- US-A- 2003 009 567
- US-A- 2004 181 550
- US-A- 2004 203 854

## Beschreibung

### Technisches Gebiet

Die Erfindung betrifft ein Vermittlungssystem für ein Mobilfunknetz zur Vermittlung von Daten zwischen *einer prozessorgesteuerten Datenverarbeitungsanlage eines* Datenanbieter*s* und einem *Mobilfunkendgerät eines Nutzers* entsprechend dem Gegenstand des Anspruchs 1.

Ferner betrifft die Erfindung ein Vermittlungsverfahren für ein Mobilfunknetz zum Vermitteln von Daten zwischen *einer prozessorgesteuerten Datenverarbeitungsanlage eines* Datenanbieter*s* und einem *Mobilfunkendgerät eines Nutzers* entsprechend dem Gegenstand des unabhängigen Anspruchs 9.

### Hintergrund und Stand der Technik

Mobilfunkendgeräte sind mittlerweile vielseitige Geräte, die nicht nur zum Telefonieren benötigt werden. Mit den Mobilfunkendgeräten lassen sich zahlreiche Programme, wie Spiele oder Organizer, benutzen und Daten bearbeiten. Dabei hat es sich als *v*orteilhaft herausgestellt, wenn die Mobilfunkendgeräte auch mit anderen Geräten zum Datenaustausch gekoppelt sind.

Es ist bekannt, Daten zwischen einer Datenverarbeitungsanlage, auch als Rechner oder Computer bezeichnet, und einem Mobilfunkendgerät auszutauschen. Dabei kann das Mobilfunkendgerät direkt mit der Datenverarbeitungsanlage beispielsweise über Kabel-, Infrarot- oder Bluetooth-Schnittstelle verbunden sein. Hier wird kein Vermittlungssystem benötigt. Daten werden unmittelbar ausgetauscht.

Weiterhin kann ein Mobilfunkendgerät über ein Mobilfunknetz mit den anderen Geräten verbunden werden. Eine Datenverarbeitungsanlage, die sowohl mit dem Mobilfunknetz, als auch mit einem weiteren Gerät verbunden ist, übernimmt dabei die Vermittleraufgabe zum Mobilfunkendgerät.

*Die* WO 02 102016 A2 *beschreibt ein Verfahren den Zugang zu Dienstleistungen im Internet zu vereinfachen. Ein Zugangsanbieter verwaltet den Datenverkehr zwischen Dienstleistungsanbieter und Benutzer. Der Zugangsverwalter führt dabei folgende Aktionen aus: Authentifikation, Autorisation, Zugangsrouting, Abrechnung und Kreditprüfung des Benutzers.*

*Die* WO 0135622 A1 *stellt ein Multimedia Nachrichten-System vor, dass unterschiedliche Multimediadaten speichern und bearbeiten kann, die von verschiedenen Kommunikationskanälen ausgesendet wurden und anschließend zu Benutzern verschiedener Endgeräte geschickt werden. Die Übermittlung der Mediadaten an die Benutzer wird durch eine einzige Schnittstelle oder auf Basis eines einzigen Übertragungsprotokolls ausgeführt, beispielsweise im MPEG7-Format.*

*Die* WO 03105444 A1 *beschreibt ein System für einen Netzwerkbetreiber, der Nachrichten-basierte Applikationen für Benutzer von Endgeräten bereitstellt, die durch ein Application Management System (AMS) verwaltet werden. Ein VASP (Value Added Service Provider) schickt die Applikationen entweder durch einen pull- oder push Service an Benutzer von Endgeräten. Vorher werden die Applikationen von dem AMS aufbereitet, an den Netzwerkbetreiber geschickt und anschließend dem Benutzer zugesendet.*

*Das AMS besteht aus verschiedenen Elementen, die die Applikationen entsprechend modifizierten, auch die Veröffentlichung und die Verfügbarkeit der Applikation wird dort koordiniert. Das AMS ist zwischen Netzwerkbetreiber und VASP geschaltet und bereitet die Applikationen entsprechend auf. Beispielsweise können die Applikationen abhängig vom Aufenthaltsort des Benutzers verändert und angepasst werden.*

*Die* WO 9741654 *beschreibt die Weitergabe von Nachrichten an einen Benutzer eines mobilen Endgerätes, wobei die übertragenden Nachrichten kontinuierlich oder im Intervall aktualisiert werden. Das System beinhaltet ein Nachrichten-Verteilungs-Zentrum, das Nachrichten in Form von SMS an mobile Endgeräte der Benutzer verschickt. Dabei werden die Nachrichten zu einer bestimmten Zeit in Abhängigkeit zur Lokalisation des Benutzers oder zu einem bestimmten Ereignis geschickt. Beispielsweise möchte der Benutzer bei einer Reise zu bestimmten Zeiten über den Verkehr informiert werden. Das Nachrichten-Verteilungs-Zentrum, sendet also in Abhängigkeit zum Aufenthaltsort des Benutzers zu einer vorbestimmten Zeit die Verkehrsinformation.*

*In der* US 2004/0181550 A1 *ein System und ein Verfahren zum Bereitstellen und Übermitteln von Medieninhalten, wie beispielsweise Text-, Bilder-, Video- und Audiodaten für Mobilfunkendgeräte beschrieben. Dazu werden die technischen Spezifikationen des anfragenden Mobilfunkendgeräts von diesem an einen Inhalte-Server übertragen. Der Inhalte-Server prüft, ob bereits bezüglich der technischen Spezifikationen angepasster Inhalt in einer Datenbank vorliegt. Falls dieses der Fall ist, wird der entsprechend angepasste Inhalt an das Mobilfunkendgerät übermittelt. Wenn kein gespeicherter angepasster Inhalt gefunden wird, erzeugt und übermittelt der Inhalte-Server anhand der technischen Spezifikationen einen angepassten Inhalt. Dieser neue angepasste Inhalt wird ferner für eine zukünftige Verwendung in der Datenbank gespeichert.*

*Die* US 2003/0009567 A1 *offenbart ebenfalls ein System und ein Verfahren zum Bereitstellen von an Mobilfunkendgeräte angepassten Medieninhalten. Dabei ermittelt ein Endgerätedetektor im Netz den Typ des anfragenden Mobilfunkendgeräts und fordert ein entsprechendes Endgeräteprofil aus einer Datenbank an. Mit Hilfe der technischen Werte aus dem Endgeräteprofil erzeugt eine Inhalte-Konvertierungseinheit aus einem geräteunabhängigen Originalinhalt einen geeignet angepassten geräteabhängigen Inhalt. Als Inhalte werden wiederum Texte, Bilder, und Videos von Inhalteanbietern angepasst. Der angepasste Inhalt wird schließlich an das Mobilfunkendgerät übermittelt. -*

*In der* US 2004/0203854 A1 *wird ein weiteres Verfahren zum Anpassen von Informationen ortsabhängiger Dienste an technische Spezifikationen des anfordernden Mobilfunkendgeräts und an Teilnehmerpräferenzen dargestellt. Dabei werden zunächst neben dem Ort des Mobilfunkendgeräts auch gespeicherte oder übermittelte technische Spezifikationen und Teilnehmerpräferenzen ermittelt. Mit Hilfe dieser Daten werden Informationen von Diensten, beispielsweise Geschäftsadressen, Öffnungszeiten und akzeptierte Zahlungsmittel eines Adressendienstes, für eine Darstellung auf dem anfordernden Mobilfunkendgerät angepasst.*

*Die* GB 2359908 A *offenbart ein Kommunikationssystem und ein Verfahren zum Herunterladen von ausführbarem Programmcode von einem Datenspeicher eines Anbieters über ein unsicheres Netz wie dem Internet an ein Mobilfunkendgerät. Angeforderter Programmcode wird zunächst in eine Prüfvorrichtung heruntergeladen und mit einem Emulator auf Kompatibilität mit dem Mobilfunkendgerät und Unschädlichkeit überprüft. Nur unschädlicher und geeigneter Programmcode wird an das Mobilfunkendgerät weitergeleitet.*

Oft werden Daten ausgetauscht, die nur ein Programm, den Nutzer oder das Mobilfunkendgerät betreffen. Diese Daten werden jedes *M*al zum Datenaustausch übertragen. Um Programme nicht auf jede Spezifikation eines Mobilfunkendgeräts anzupassen werden häufig alle Spezifikationen angenommen. Daher werden in der Regel mehr Daten Übertragen als es nötig ist.

### Offenbarung der Erfindung

Als Aufgabe der Erfindung wird daher angesehen, die Nachteile des Standes der Technik zu vermeiden. Es ist ferner Aufgabe der Erfindung, ein System bzw. ein Verfahren zu entwickeln, welches es beim Datenaustausch ermöglicht, erforderliche Informationen seines Tauschpartners zu ermitteln, ohne mit dem Tauschpartner unmittelbar in Kontakt zu stehen.

Erfingdungsgemäß wird die Aufgabe dadurch gelöst, dass bei einem Vermittlungssystem der eingangs genannten Art für ein Mobilfunknetz zur Vermittlung von Daten zwischen einer prozessorgesteuerten Datenverarbeitungsanlage eines Datenanbieters und einem Mobilfunkendgerät eines Nutzers gemäß dem Oberbegriff des Anspruchs 1,
*(f) Mittel zum Personalisieren zur Anpassung von angeforderten Programmdaten, welche von einem Prozessor abgearbeitet werden können, an ein Betriebssystem oder einen Prozessor des Mobilfunkendgeräts wobei Programmdaten nach Mobilfunkendgerätetyp selektiert werden, und Filtermittel, welche schädliche Sabotageprogramme und*/*oder Sabotagedaten aus den zu vermittelnden Daten herausfiltern, vorgesehen sind.*

Weiterhin wird die Aufgabe durch ein Vermittlungsverfahren der eingangs genannten Art für ein Mobilfunknetz zum Vermitteln von Daten zwischen einer prozessorgesteuerten Datenverarbeitungsanlage eines Datenanbieters und einem Mobilfunkendgerät eines Nutzers gemäß dem Oberbegriff des Anspruchs 9 mit dem Verfahrensschritt gelöst:
h) die zu vermittelnden Daten als Programmdaten ausgebildet sind, welche von einem Prozessor abgearbeitet werden können, die Programmdaten an ein Betriebssystem oder einen Prozessor des Mobilfunkendgeräts angepasst werden, wobei Programmdaten nach Mobilfunkendgerätetyp selektiert werden, und dass schädliche Sabotageprogramme und/oder Sabotagedaten aus den zu vermittelnden Daten herausgefiltert werden.

Durch das erfindungsgemäße Vermittlungssystem bzw. das erfindungsgemäße Verfahren ist es nunmehr für den Anbieter von Daten, insbesondere Programmen, nicht mehr erforderlich, die Daten speziell aufzubereiten, damit ein Mobilfunkendgerätenutzer darauf zugreifen kann. Der Mobilfunkendgerätenutzer zieht nun den Vorteil daraus, dass er aufgrund des Profils, was im Vermittlungssystem vorliegt, nicht mehr alle Daten übermitteln muss, was seine Mobilfunkkosten reduziert. Die Daten können individuell durch den Datenanbieter angepasst werden.

In dem erfindungsgemäßen Vermittlungssystems sind die Daten als Programmdaten, insbesondere Spieledaten, ausgebildet, welche von einem Prozessor abgearbeitet werden können. Die Programme können dabei beispielsweise als Java-Applikationen ausgebildet sein. Insbesondere dadurch lassen sich die Programme leicht auf jeder Plattform, d. h. auch auf Mobilfunkendgeräten, umsetzen.

Um Angriffe durch Computerviren und dergleichen zu verhindern, weist das erfindungsgemäße Vermittlungssystem Filtermittel auf, welche schädliche Sabotageprogramme und/oder Sabotagedaten, wie beispielsweise Computerviren, Computerwürmer oder Trojaner aus den Daten herausfiltern. Damit wird erreicht, dass schon im Vorfeld, bevor die Daten zu den Mobilfunkendgeräten gelangen, diese vor solchen Sabotageprogrammen geschützt werden.

Entsprechend zum erfindungsgemäßen Vermittlungssystem zeigt sich als vorteilhaft, wenn bei dem erfindungsgemäßen Vermittlungsverfahren die Daten als Programmdaten, insbesondere Spieledaten, ausgebildet sind, welche von einem Prozessor abgearbeitet werden können. Die Programme können dabei beispielsweise als Java-Applikationen ausgebildet sein. Insbesondere dadurch lassen sich die Programme leicht auf jeder Plattform, d. h. auch auf Mobilfunkendgeräten, umsetzen.

Das erfindungsgemäße Vermittlungsverfahren sieht vor, dass schädliche Sabotageprogramme und/oder Sabotagedaten, wie beispielsweise Computerviren, Computerwürmer oder Trojaner aus den aus dem Internet bezogenen Daten herausgefiltert werden. Damit wird das Mobilfunkendgerät schon im Vorfeld, d. h. bevor die Programme zum Mobilfunkendgerät gelangen, vor diesen schädlichen Programmen bewahrt. Vorzugsweise werden nur solche Daten aus dem Internet an das Mobilfunkendgerät über das Mobilfunknetz übermittelt, die von der Datenverarbeitungsanlage überprüft wurden. Dies erhöht die Anwendungssicherheit für den Mobilfunkendgerätenutzer.

Vorzugsweise enthält das Vermittlungssystem eine Datenverarbeitungsanlage, welche die Daten für ein bestimmtes Prozessorsystem und/oder Betriebssystem eines Mobilfunkendgeräts anpasst. Da die Mobilfunkendgeräte oft mit unterschiedlichen Betriebssystemen und Prozessoren ausgerüstet sind, ist es erforderlich die Daten entsprechend anzupassen, was das erfindungsgemäße Vermittlungssystem nun leistet.

Es ist nicht selbstverständlich, dass die vom Mobilfunkendgerät angeforderten Datenströme auch über das Mobilfunknetz weitergeleitet werden. Eine vorteilhafte Ausbildung des erfindungsgemäßen Vermittlungssystem und des Vermittlungsverfahren ergibt sich daher, wenn die aus dem Internet bezogenen Daten ganz oder teilweise über das Mobilfunknetz an das Mobilfunkendgerät übermittelt werden.

Eine bevorzugte Ausgestaltung des erfindungsgemäßen Vermittlungssystems erhält man, wenn die zu vermittelnden Daten ganz oder teilweise in dem Speicher einer zentralen Datenverarbeitungsanlage gespeichert werden. Die Daten, die aus dem Internet bezogen werden, werden quasi in dem Speicher der zentralen Datenverarbeitungsanlage zwischengespeichert, wo sie dann ggf. auch noch angepasst werden können. Diese Zwischenspeicherung dient auch dazu, dass der Datenstrom zum Mobilfunkendgerät nicht abreißt, wenn keine Verbindung zum Anbieter aufgebaut werden kann.

Ferner erhält man eine vorteilhafte Ausgestaltung des erfindungsgemäßen Vermittlungssystem bzw. des erfindungsgemäßen Vermittlungsverfahren, wenn nur solche Daten angepasst und an das Mobilfunkendgerät übermittelt werden, welche von dem Mobilfunkendgerät angefordert werden, wobei mit jeder Anforderungen an das Vermittlungssystem jeweils der Mobilfunkendgerätetyp übermittelt wird. Das Vermittlungssystem ist vorzugsweise in der Lage, mehr Daten zu beschaffen, als gerade angefordert worden sind. Durch diese Zwischenspeicherung kann erreicht werden, dass die Daten schneller angepasst und an das Mobilfunkendgerät übermittelt werden können. Es werden dabei jedoch immer nur solche Daten übermittelt, die von dem Mobilfunkendgerät momentan angefordert werden.

Da das Betreiben eines solchen Vermittlungssystems mit Kosten verbunden ist, sind in einer bevorzugten Ausgestaltung der Erfindung Abrechnungsmittel vorgesehen, welche Kosten für die Anpassung und/oder für die Überprüfung der aus dem Internet bezogenen Daten, sowie deren Übermittlung an das Mobilfunkendgerät erfassen.

Eine weitere vorteilhafte Ausgestaltung des erfindungsgemäßen Vermittlungsverfahrens ergibt sich daraus, dass die aus dem Internet bezogenen Daten für ein bestimmtes Prozessorsystem und/oder Betriebssystem eines Mobilfunkendgeräts angepasst werden.

In einer bevorzugten Ausbildung des erfindungsgemäßen Verfahrens sind die Daten ganz oder teilweise in dem Speicher einer zentralen Datenverarbeitungsanlage vorgesehen. Dadurch lässt sich die Anpassung der Daten zentral vornehmen, speichern und verwalten.

In einer weiteren Ausgestaltung des erfindungsgemäßen Vermittlungsverfahrens werden nur solche Daten angepasst und an das Mobilfunkendgerät übermittelt, welche von dem Mobilfunkendgerät angefordert werden, wobei mit jeder Anforderungen an das Vermittlungssystem jeweils der Mobilfunkendgerätetyp als digitaler Code übermittelt wird. Diese Maßnahme bewirkt, dass nur die notwendigen Daten übermittelt werden und die Datenverbindungen nicht mit überflüssigen Datenströmen belastet werden. Zudem können die Daten nach Gerätetyp selektiert werden.

Um die Kosten, die ein solches Verfahren verursachten zu erhalten, werden in einer vorteilhaften Ausgestaltung des erfindungsgemäßen Vermittlungsverfahrens die Kosten für die Anpassung und/oder für die Überprüfung der aus dem Internet bezogenen Daten, sowie deren Übermittlung an das Mobilfunkendgerät erfasst und mit dem Nutzer des Mobilfunkengeräts abgerechnet werden.

Weitere Vorteile ergeben sich aus dem Gegenstand der Unteransprüche sowie der Zeichnung mit der dazugehörigen Beschreibung.

### Kurze Beschreibung der Zeichnung

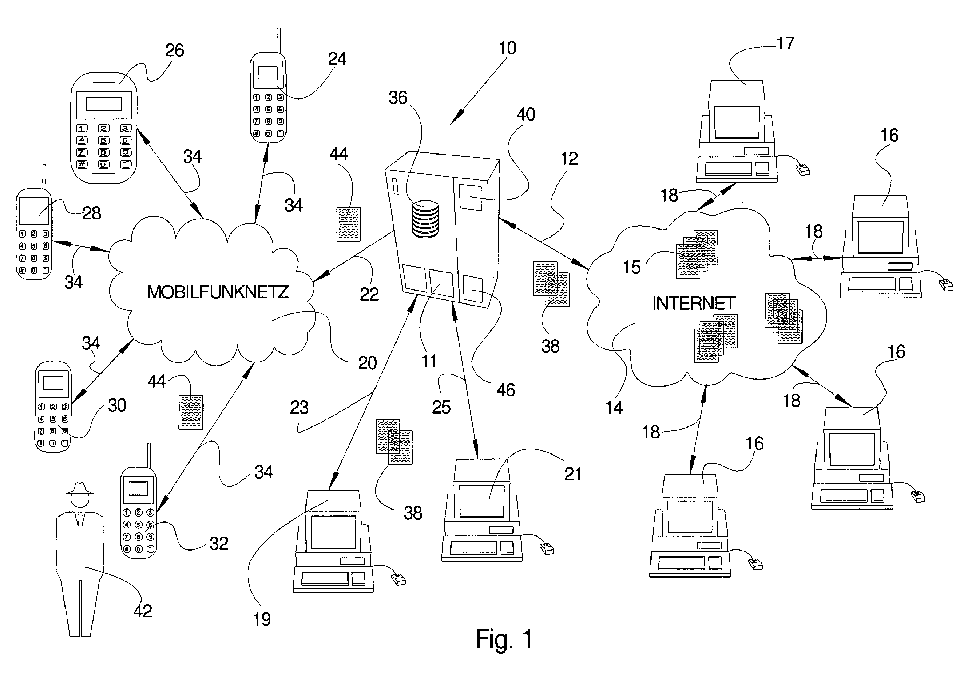

- Fig. 1: zeigt in einer Prinzipskizze ein erfindungsgemäßes Vermittlungssystem.

### Bevorzugtes Ausführungsbeispiel

In Fig. 1 wird mit 10 das erfindungsgemäße Vermittlungssystem bezeichnet. Das Vermittlungssystem 10 enthält eine prozessorgesteuerte Datenverarbeitungsanlage 11, die über eine Internetschnittstelle 12 mit dem Internet 14 verbunden ist. Das Internet 14 besteht aus einem Computernetzwerk, an dem weltweit zahlreiche Computer 16, 17 miteinander verbunden sind. Das Internet 14 selbst wird symbolisch als Wolke dargestellt, da dort beliebig viele Computer 16, 17 angeschlossenen sein können. Die dargestellten Computer 16 sind ebenfalls nur symbolisch. Die Computer 16, 17 verfügen jeweils über eine internettaugliche Verbindung 18 zum Internet 14. Zum Internet 14 sind jeweils bidirektionale Kanäle vorgesehen, so dass Daten 15 sowohl in das Internet 14 gegebenen, als auch abgerufen werden können.

Computer 19, 21 sind direkt mit dem Vermittlungssystem 10, d.h. mit der Datenverarbeitungsanlage 11 verbunden. Computer 19 ist über ein als Festnetz ausgebildetes öffentliches Telefonnetz 23 mit der Datenverarbeitungsanlage verbunden. Computer 21 verfügt hingegen über eine direkte, nichtöffentliche Leitung 25.

Die Datenverarbeitungsanlage 11 ist ferner mit einem Mobilfunknetz 20 verbunden, Pfeil 22. Das Mobilfunknetz 20 ist zur Anschaulichkeit symbolisch als Wolke dargestellt und beinhaltet alles, was zum Betreiben eines solchen Funknetzes, beispielsweise nach dem GSM- oder UMTS-Standard, erforderlich ist. Zur Veranschaulichung sind fünf verschiedene Mobilfunkendgeräte 24, 26, 28, 30, 32 abgebildet, die an dem Betrieb des Mobilfunknetzes 20 teilnehmen können. Die Mobilfunkendgeräte 24, 26, 28, 30, 32 sind von verschiedenen Herstellern bzw. verschiedene Typen. Die Mobilfunkendgeräte 24, 26, 28, 30, 32 werden demnach mit unterschiedlichen Prozessoren und unterschiedlicher Software, insbesondere dem Betriebssystem, betrieben. Funkverbindung 34 zwischen Mobilfunkendgeräten 24, 26, 28, 30, 32 und dem Mobilfunknetz 20 ist die jeweils bidirektional ausgebildet.

Die Datenverarbeitungsanlage 11 des Vermittlungssystems 10 verfügt über einen Speicher 36. Daten 38, die aus dem Internet zur Datenverarbeitungsanlage 11 gelangen, werden von einem Virenscanner 40 geprüft. Der Virenscanner 40 fungiert zudem als Filter und lässt nur solche Daten 38 zur Vermittlung durch, die keine Viren und dergleichen enthalten.

Für das Internet 14 werden von Spieleanbietern Spiele angeboten, die speziell für das Internet 14 entwickelt worden sind. Diese Spiele werden dann beispielsweise mit dem Computer 17 dem Internetpublikum zur Verfügung gestellt. Jeder Internetnutzer kann dann mit seinem Computer 16, sofern er Zugang zu der Internetseite des Spieleanbieters hat, auf das Spiel zugreifen und mit seinem Computer 16 spielen.

Anhand eines einfachen Beispieles soll im Folgenden nun das Vermittlungssystem und das Vermittlungsverfahren kurz erläutert werden. Ein Nutzer 42, der ein Spiel im Internet 14 kennen gelernt hat, möchte dieses gerne auch mit seinem Mobilfunkendgerät 32 spielen.

Der Nutzer 42 fordert nun mit seinem Mobilfunkendgerät 32 bei dem Vermittlungssystem 10 das Spiel eines Anbieters an. Dabei kann beispielsweise die Internetadresse der Internetseite angegeben werden, auf welcher das Spiel angeboten wird. Bei der Datenanforderung an das Vermittlungssystem 10 teilt das Mobilfunkendgerät 32 automatisch die technischen Spezifikationen als digitalen Code mit. Die Datenverarbeitungsanlage 11 des Vermittlungssystems 10 sucht nun den Rechner des Anbieters von Spielen auf und speichert die dort bezogenen Daten 38 im Speicher 36 zwischen. Dabei können Verbindungen über das Internet 14, als auch direkte Leitungen 23, 25 zu den Rechnern 17, 19 oder 21 zur Kommunikation mit den Rechnern der Spieleanbieter verwendet werden. Bevor das Spiel weitervermittelt *wird*, wird es durch den Virenscanner 40 überprüft, ob irgendwelche Sabotageprogramme und/oder Sabotagedaten in den Daten 38 enthalten sind.

Anhand der technischen Spezifikationen kann die Datenverarbeitungsanlage 11 des Vermittlungssystems 10 nun die zu dem Spiel gehörigen Daten, welche durch das Mobilfunkendgerät 32 angefordert wurden, an dessen Spezifikationen anpassen. Die Datenverarbeitungsanlage 11 verfügt dafür über ein Profil des Mobilfunkendgeräts 32, welches in dem Speicher 36 vorliegt. So kann das Spiel speziell für das Mobilfunkendgerät 32 angepasst werden. Ein anderer technischer Anpassungsvorgang besteht beispielsweise darin, die aus dem Internet 14 bezogenen Daten an das Betriebssystem und/oder den Prozessor des Mobilfunkendgeräts anzupassen. Oft reicht es aus, nicht sämtliche Daten 38 anzupassen, sondern nur einen Teil der Daten 38. Dies trifft z.B. dann zu, wenn ein Programmcode in Java erstellt wurde. Interpreter dieser Programmiersprache finden sich nämlich auch auf den meisten Mobilfunkendgeräten 24, 26, 28, 30, 32. Die Java-Daten können dann von diesen Mobilfunkendgeräten 24, 26, 28, 30, 32 problemlos verarbeitet werden, sofern nicht spezielle Hardware angesprochen wird, die im Mobilfunkendgerät 32 nicht implementiert ist.

Wenn die Daten für das Mobilfunkendgerät 32 von dem Vermittlungssystem 10 angepasst sind, werden die angepassten Daten 44 an das Mobilfunkendgerät über das Mobilfunknetz übermittelt. Die Daten 44 können nun von dem Mobilfunkendgerät 32 verarbeitet werden.

Eine Abrechnungseinheit 46 ermittelt schließlich die Menge der vermittelten Daten 44 und bestimmt daraus die Kosten, die für den Nutzer 42 entstehen.

## Patentansprüche

1. Vermittlungssystem für ein Mobilfunknetz (20) zur Vermittlung von Daten (38) zwischen *einer prozessorgesteuerten Datenverarbeitungsanlage (17, 19, 21) eines* Datenanbieters und einem *Mobilfunkendgerät (32) eines Nutzers* (42), enthaltend
(a) eine prozessorgesteuerte Datenverarbeitungsanlage (11) mit einem digitalen Speicher (36) als Vermittlungseinrichtung,
(b) eine Verbindung zwischen der Datenverarbeitungsanlage (11) des Vermittlungssystems (10) und der prozessorgesteuerten Datenverarbeitungsanlage des Datenanbieters,
(c) eine Verbindung (22, 34) zwischen der Datenverarbeitungsanlage (11) des Vermittlungssystems (10) und dem Mobilfunknetz (20),
(d) eine Verbindung von der Datenverarbeitungsanlage (11) des Vermittlungssystems (10) zu dem Mobilfunkendgerät (32) über das Mobilfunknetz (20),
(e) Mittel zum Personalisieren der zu vermittelnden Daten (38) nach einem in der Datenverarbeitungsanlage (11) des Vermittlungssystems (10) vorgesehenen Profil, *wobei bei einer Datenanforderung des Nutzers (42) die technische Spezifikation des Mobilfunkendgerätes (32) als digitaler Code an das Vermittlungssystem (10) übermittelt wird und die Datenverarbeitungsanlage (11) des Vermittlungssystems (10) die angeforderten Daten an die Spezifikation des Mobilfunkendgerätes (32) anpasst,*
***dadurch gekennzeichnet, dass***
*(f) die Mittel zum Personalisieren zur Anpassung von angeforderten Daten welche als Programmdaten ausgebildet sind und von einem Prozessor abgearbeitet werden können, an ein Betriebssystem oder einen Prozessor des Mobilfunkendgeräts (32) ausgebildet sind, wobei die Programmdaten nach Mobilfunkendgerätetyp selektiert werden, und Filtermittel (40), welche schädliche Sabotageprogramme und*/*oder Sabotagedaten aus den zu vermittelnden Daten (38) herausfiltern können, vorgesehen sind.*

2. Vermittlungssystem (10) für ein Mobilfunknetz (20) zur Vermittlung von Daten zwischen einem Datenanbieter und einem Mobilfunkendgerät (32) nach Anspruch 1, **dadurch gekennzeichnet, dass** die Datenverarbeitungsanlage (11) des Vermittlungssystems (10) Mittel zum Anhängen von Personalisierungsdaten an die zu vermittelnden Daten (38) aufweist.

3. Vermittlungssystem (10) für ein Mobilfunknetz (20) zur Vermittlung von Daten zwischen einem Datenanbieter und einem Mobilfunkendgerät (32) nach einem der Ansprüche 1 oder 2, **dadurch gekennzeichnet, dass** die Verbindung (12, 23, 25) und/oder die Funkverbindung (34) jeweils bidirektional ausgebildet ist.

4. Vermittlungssystem (10) für ein Mobilfunknetz (20) zur Vermittlung von Daten zwischen einem Datenanbieter und einem Mobilfunkendgerät (32) nach einem der Ansprüche 1 bis 3, **dadurch gekennzeichnet, dass** die Verbindung (12) als Netzwerkverbindung ausgebildet ist.

5. Vermittlungssystem (10) für ein Mobilfunknetz (20) zur Vermittlung von Daten zwischen einem Datenanbieter und einem Mobilfunkendgerät (32) nach Anspruch 4, **dadurch gekennzeichnet, dass** das Internet (14) als Netzwerkverbindung (12) vorgesehen ist.

6. Vermittlungssystem (10) für ein Mobilfunknetz (20) zur Vermittlung von Daten zwischen einem Datenanbieter und einem Mobilfunkendgerät (32) nach einem der Ansprüche 1 bis 5, **dadurch gekennzeichnet, dass** die zu vermittelnden Daten (38) in dem Speicher (36) der Vermittlungseinrichtung zur Zwischenspeicherung vorgesehen sind.

7. Vermittlungssystem (10) für ein Mobilfunknetz (20) zur Vermittlung von Daten zwischen einem Datenänbieter und einem Mobilfunkendgerät (32) nach einem der Ansprüche 1 bis 6, **dadurch gekennzeichnet, dass** nur solche Daten (38) durch die Vermittlungseinrichtung vermittelt werden die durch das Mobilfunkendgerät (32) und/oder die Datenverarbeitungsanlage des Datenanbieters jeweils angefordert werden.

8. Vermittlungssystem (10) für ein Mobilfunknetz (20) zur Vermittlung von Daten zwischen einem Datenanbieter und einem Mobilfunkendgerät (32) nach einem der Ansprüche 1 bis 8, **gekennzeichnet durch** Abrechnungsmittel (46), welche Kosten für die Vermittlung und/oder für die Überprüfung der zu vermittelnden Daten (38, 44) erfassen.

9. Vermittlungsverfahren für ein Mobilfunknetz (20) zum Vermitteln von Daten (38) zwischen *einer prozessorgesteuerten Datenverarbeitungsanlage (17. 19, 21) eines* Datenanbieters und einem *Mobilfunkendgerät (32) eines Nutzers* (42), mit folgenden Verfahrensschritten:
a) Aufbauen einer Verbindung zwischen einer Datenverarbeitungsanlage (11) des Vermittlungssystems (10) und *der* Datenverarbeitungsanlage (17, 19, 21) des Datenanbieters,
b) Aufbauen einer Verbindung über das Mobilfunknetz (20) zwischen der Datenverarbeitungsanlage (11) des Vermittlungssystems (10) und dem Mobilfunkendgerät (32) des *Nutzers* (42),
c) Übertragen von zu vermittelnden Daten (38) zu der Datenverarbeitungsanlage (11) des Vermittlungssystems (10),
d) Zwischenspeichern der zu vermittelnden Daten (38) in einem Speicher (36) der Datenverarbeitungsanlage (11) des Vermittlungssystems (10),
e) Übermitteln der in dem Speicher (36) zwischengespeicherten Daten (38) an das Mobilfunkendgerät (32),
f) Übermitteln der zu vermittelnden Daten (38) aus dem Speicher (36) an die Datenverarbeitungsanlage (17) des Datenanbieters,
g) Personalisieren der zu vermittelnden Daten (38) nach einem Profil, welches in der Datenverarbeitungsanlage (11) des Vermittlungssystems (10) gespeichert ist, *wobei bei einer Datenanforderung des Nutzers (42) die technische Spezifikation des Mobilfunkendgerätes (32) als digitaler Code an das Vermittlungssystem (10) übermittelt wird und die Datenverarbeitungsanlage (11) des Vermittlungssystems (10) die angeforderten Daten an die Spezifikation des Mobilfunkendgerätes (32) anpasst,*
**dadurch gekennzeichnet, dass**
*h) die zu vermittelnden Daten (38) als Programmdaten ausgebildet sind, welche von einem Prozessor abgearbeitet werden können, die Programmdaten an ein Betriebssystem oder einen Prozessor des Mobilfunkendgeräts (32) angepasst werden, wobei die Programmdaten nach Mobilfunkendgerätetyp selektiert werden, und dass schädliche Sabotageprogramme und*/*oder Sabotagedaten aus den zu vermittelnden Daten (38) herausgefiltert werden.*

10. Vermittlungsverfahren für ein Mobilfunknetz (20) zum Vermitteln von Daten (38) zwischen einem Datenanbieter und einem *Nutzer* (42) nach Anspruch *9*, **dadurch gekennzeichnet, dass** Personalisierungsdaten an die zu vermittelnden Daten (38) angehängt werden.

11. Vermittlungsverfahren für ein Mobilfunknetz (20) zum Vermitteln von Daten (38) zwischen einem Datenanbieter und einem *Nutzer* (42) nach einem der Ansprüche *9* bis *10*, **dadurch gekennzeichnet, dass** die zu vermittelnden Daten (38) sowohl in Richtung Mobilfunkendgerät, als auch in Richtung Datenverarbeitungsanlage des Datenanbieters übermittelt werden.

12. Vermittlungsverfahren für ein Mobilfunknetz (20) zum Vermitteln von Daten (38) zwischen einem Datenanbieter und einem *Nutzer*(42) nach einem der Ansprüche *9* bis *11,* **dadurch gekennzeichnet, dass** die Datenverarbeitungsanlage (17) des Datenanbieters über ein Netzwerk (14), insbesondere dem Internet, mit der Datenverarbeitungsanlage (11) des Vermittlungssystems (10) verbunden wird.

13. Vermittlungsverfahren für ein Mobilfunknetz (20) zum Vermitteln von Daten (38) zwischen einem Datenanbieter und einem *Nutzer*(42) nach Anspruch *11*, **dadurch gekennzeichnet, dass** die zu vermittelnden Daten (38) nach dem Profil angepasst werden.

14. Vermittlungsverfahren für ein Mobilfunknetz (20) zum Vermitteln von Daten (38) zwischen einem Datenanbieter und einem *Nutzer*(42) nach einem der Ansprüche *9* bis *13*, **dadurch gekennzeichnet, dass** nur angeforderte Daten (32) von der Datenverarbeitungsanlage (11) des Vermittlungssystems (10) vermittelt werden.

15. Vermittlungsverfahren für ein Mobilfunknetz (20) zum Vermitteln von Daten (38) zwischen einem Datenanbieter und einem *Nutzer*(42) nach einem der Ansprüche *9* bis *14*, **dadurch gekennzeichnet, dass** nur von der Datenverarbeitungsanlage (11) des Vermittlungssystems (10) überprüfte Daten (44) weitervermittelt werden.

16. Vermittlungsverfahren für ein Mobilfunknetz (20) zum Vermitteln von Daten (38) zwischen einem Datenanbieter und einem *Nutzer*(42) nach einem der Ansprüche *9* bis *15*, **dadurch gekennzeichnet, dass** Kosten für die Vermittlung und/oder für die Überprüfung der zu vermittelnden Daten (38, 44), durch die Datenverarbeitungsanlage (11) des Vermittlungssystems (10) erfasst und abgerechnet werden.

## Claims

1. A switching system for a mobile radio network (20) for switching data (38) between a processor controlled data processing unit (17, 19, 21) of a data provider and a mobile station (32) of a user (42), comprising
(a) a processor controlled data processing unit (11) with a digital storage (36) provided as switching device,
(b) a connection between the data processing unit (11) of the switching system (10) and the processor controlled data processing unit of the data provider,
(c) a connection (22, 34) between the data processing unit (11) of the switching system (10) and the mobile radio network (20),
(d) a connection from the data processing unit (11) of the switching system (10) to the mobile station (32) via the mobile radio network (20),
(e) means for personalizing the data (38) to be switched according to a profile provided in the data processing unit (11) of the switching system (10), wherein the technical specification of the mobile station (32) is transmitted in digital code to the switching system (10) during a data request of the user (42) and the data processing unit (11) of the switching system (10) adapts the requested data to the specification of the mobile station (32),
**characterized in that**
f) the means for personalizing are configured for adaptation of requested data being program data which can be processed by a processor, to an operating system or a processor of the mobile station (32), wherein the program data is selected according to the mobile station type; and filter means (40) are provided which can filter damaging sabotaging programs and/or sabotaging data from the data (38) to be switched.

2. A switching system (10) for a mobile radio network (20) for switching data between a data provider and a mobile station (32) according to claim 1, **characterized in that** the data processing unit (11) of the switching system (10) is provided with means for attaching personalizing data to the data (38) to be switched.

3. A switching system (10) for a mobile radio network (20) for switching data between a data provider and a mobile station (32) according to claim 1 or 2, **characterized in that** the connection (12, 23, 25) and/or radio connection (34) each are configured bidirectional.

4. A switching system (10) for a mobile radio network (20) for switching data between a data provider and a mobile station (32) according to any of claims 1 to 3, **characterized in that** the connection (12) is a network connection.

5. A switching system (10) for a mobile radio network (20) for switching data between a data provider and a mobile station (32) according to claim 4, **characterized in that** the internet (14) is provided as network connection (12).

6. A switching system (10) for a mobile radio network (20) for switching data between a data provider and a mobile station (32) according to any of claims 1 to 5, **characterized in that** the data (38) to be switched is provided in the storage (36) of the switching device for intermediate storage.

7. A switching system (10) for a mobile radio network (20) for switching data between a data provider and mobile station (32) according to any of claims 1 to 6, **characterized in that** only data (38) is switched by the switching device which is requested by the mobile station (32) and/or by the data processing unit of the data provider, respectively.

8. A switching system (10) for a mobile radio network (20) for switching data between a data provider and a mobile station (32) according to any of claims 1 to 8, **characterized by** invoicing means (46) registering the costs for the switching and/or checking of the data (38, 44) to be switched.

9. A switching method for a mobile radio network (20) for switching data (38) between a processor controlled data processing unit (17, 19, 21) of a data provider and a mobile station (32) of a user (42) comprising the steps of:
a) establishing a connection between a data processing unit (11) of the switching system (10) and the data processing unit (17, 19, 21) of the data provider,
b) establishing a connection via the mobile radio network (20) between the data processing unit (11) of the switching system (10) and the mobile station (32) of the user (42),
c) transmitting data (38) to be switched to the data processing unit (11) of the switching system (10),
d) intermediately storing the data (38) to be switched in a storage (36) of the data processing unit (11) of the switching system (10),
e) transmitting the data (38) intermediately stored in the storage (36) to the mobile station (32),
f) transmitting the data (38) to be switched from the storage (36) to the data processing unit (17) of the data provider,
g) personalizing the data (38) to be switched according to a profile which is stored in the data processing unit (11) of the switching system (10), wherein the technical specification of the mobile station (32) is transmitted in digital code to the switching system (10) during a data request of the user (42) and the data processing unit (11) of the switching system (10) adapts the requested data to the specification of the mobile station (32),
**characterized in that**
h) the data (38) to be switched is program data which can be processed by a processor and the program data is adapted to an operating system or a processor of the mobile station (32), wherein the program data is selected according to the mobile station type; and that damaging sabotaging programs and/or sabotaging data are filtered from the data (38) to be switched.

10. A switching method for a mobile radio network (20) for switching data (38) between a data provider and a user (42) according to claim 9, **characterized in that** personalizing data is attached to the data (38) to be switched.

11. A switching method for a mobile radio network (20) for switching data (38) between a data provider and a user (42) according to any of claims 9 or 10, **characterized in that** the data (38) to be switched is transmitted in direction to the mobile station as well as in direction to the data processing unit of the data provider.

12. A switching method for a mobile radio network (20) for switching data (38) between a data provider and a user (42) according to any of claims 9 to 11, **characterized in that** the data processing unit (17) of the data provider is connected to the data processing unit (11) of the switching system (10) via a network (14), in particular the internet.

13. A switching method for a mobile radio network (20) for switching data (38) between a data provider and a user (42) according to claim 11, **characterized in that** the data (38) to be switched is adapted to the profile.

14. A switching method for a mobile radio network (20) for switching data (38) between a data provider and a user (42) according to any of claims 9 to 13, **characterized in that** only requested data (32) is switched by the data processing unit (11) of the switching system (10).

15. A switching method for a mobile radio network (20) for switching data (38) between a data provider and a user (42) according to any of claims 9 to 14, **characterized in that** only data (44) checked by the data processing unit (11) of the switching system (10) is switched.

16. A switching method for a mobile radio network (20) for switching data (38) between a data provider and a user (42) according to any of claims 9 to 15, **characterized in that** costs for the switching and/or the checking of the data (38, 44) to be switched by the data processing unit (11) of the switching system (10) are registered and invoiced.

## Revendications

1. Système de transmission pour un réseau de radiotéléphonie mobile (20) destiné à la transmission de données (38) entre une unité de traitement de données commandée par processeur (17, 19, 21) d'un fournisseur de données et d'un terminal de radiotéléphonie (32) d'un utilisateur (42), comprenant
(a) une unité de traitement de données commandée par processeur (11) munie d'une mémoire numérique (36) faisant fonction de dispositif de transmission,
(b) une connexion entre l'unité de traitement de données (11) du système de transmission (10) et l'unité de traitement de données commandée par processeur du fournisseur de données,
(c) une connexion (22, 34) entre l'unité de traitement de données (11) du système de transmission (10) et le réseau de radiotéléphonie mobile (20),
(d) une connexion de l'unité de traitement de données (11) du système de transmission (10) vers le terminal de radiotéléphonie mobile (32) via le réseau de radiotéléphonie mobile (20),
(e) des moyens de personnalisation des données à transmettre (38) d'après un profil prévu dans l'unité de traitement de données (11) du système de transmission (10), lorsque l'utilisateur (42) demande les données, la spécification technique du terminal de radiotéléphonie mobile (32) étant envoyée au système de transmission (10) sous forme de code numérique et l'unité de traitement de données (11) du système de transmission (10) adaptant les données demandées à la spécification du terminal de radiotéléphonie mobile (32),
**caractérisé en ce que**
(f) les moyens de personnalisation sont configurés pour adapter les données demandées, se présentant sous forme de données de programme et pouvant être traitées par un processeur, à un système d'exploitation ou un processeur du terminal de radiotéléphonie mobile (32), les données de programme étant sélectionnées selon un type de terminal de radiotéléphonie mobile et les moyens de filtre (40) pouvant filtrer dans les données à transmettre (38) les programmes de sabotage et/ou les données de sabotage nuisibles.

2. Système de transmission (10) pour un réseau de radiotéléphonie mobile (20) destiné à la transmission de données entre un fournisseur de données et un terminal de radiotéléphonie mobile (32) selon la revendication 1, **caractérisé en ce que** l'unité de traitement de données (11) du système de transmission (10) présente des moyens d'attacher des données de personnalisation aux données à transmettre (38).

3. Système de transmission (10) pour un réseau de radiotéléphonie mobile (20) destiné à la transmission de données entre un fournisseur de données et un terminal de radiotéléphonie mobile (32) selon l'une quelconque des revendications 1 ou 2, **caractérisé en ce que** la connexion (12, 23, 25) et/ou la connexion radiotéléphonique (34) se présente à chaque fois sous forme bidirectionnelle.

4. Système de transmission (10) pour un réseau de radiotéléphonie mobile (20) destiné à la transmission de données entre un fournisseur de données et un terminal de radiotéléphonie mobile (32) selon l'une quelconque des revendications 1 à 3, **caractérisé en ce que** la connexion (12) se présente sous forme de connexion réseau.

5. Système de transmission (10) pour un réseau de radiotéléphonie mobile (20) destiné à la transmission de données entre un fournisseur de données et un terminal de radiotéléphonie mobile (32) selon la revendication 4, **caractérisé en ce qu'**internet (14) est prévu sous forme de connexion réseau (12).

6. Système de transmission (10) pour un réseau de radiotéléphonie mobile (20) destiné à la transmission de données entre un fournisseur de données et un terminal de radiotéléphonie mobile (32) selon l'une quelconque des revendications 1 à 5, **caractérisé en ce que** les données à transmettre (38) sont prévues dans la mémoire (36) du dispositif de transmission en vue d'être mémorisées temporairement.

7. Système de transmission (10) pour un réseau de radiotéléphonie mobile (20) destiné à la transmission de données entre un fournisseur de données et un terminal de radiotéléphonie mobile (32) selon l'une quelconque des revendications 1 à 6, **caractérisé en ce que** le dispositif de transmission ne transmet que les données (38) demandées à chaque fois par le terminal de radiotéléphonie mobile (32) et/ou l'unité de traitement de données du fournisseur de données.

8. Système de transmission (10) pour un réseau de radiotéléphonie mobile (20) destiné à la transmission de données entre un fournisseur de données et un terminal de radiotéléphonie mobile (32) selon l'une quelconque des revendications 1 à 8, **caractérisé par** des moyens de facturation (46) saisissant les frais de transmission et/ou de vérification des données à transmettre (38, 44).

9. Procédé de transmission pour un réseau de radiotéléphonie mobile (20) destiné à transmettre des données (38) entre une unité de traitement de données (17, 19, 21), commandée par processeur, d'un fournisseur de données et un terminal de radiotéléphonie mobile (32) d'un utilisateur (42), comprenant les étapes de procédé suivantes :
(a) établissement d'une connexion entre une unité de traitement de données (11) du système de transmission (10) et l'unité de traitement de données (17, 19, 21) du fournisseur de données,
(b) établissement d'une connexion via le réseau de radiotéléphonie mobile (20) entre l'unité de traitement de données (11) du système de transmission (10) et le terminal de radiotéléphonie mobile (32) de l'utilisateur (42),
(c) transfert des données à transmettre (38) vers l'unité de traitement de données (11) du système de transmission (10),
(d) mémorisation temporaire des données à transmettre (38) dans une mémoire (36) de l'unité de traitement de données (11) du système de transmission (10),
(e) transmission des données (38) mémorisées temporairement dans la mémoire (36) au terminal de radiotéléphonie mobile (32),
(f) transfert des données à transmettre (38) de la mémoire (36) à l'unité de traitement de données (17) du fournisseur de données,
(g) personnalisation des données à transmettre (38) d'après un profil mémorisé dans l'unité de traitement de données (11) du système de transmission (10), lorsque l'utilisateur (42) demande les données, la spécification technique du terminal de radiotéléphonie mobile (32) étant envoyée au système de transmission (10) sous forme de code numérique et l'unité de traitement de données (11) du système de transmission (10) adaptant les données demandées à la spécification du terminal de radiotéléphonie mobile (32),
**caractérisé en ce que**
(h) les données à transmettre (38) sont configurées sous forme de données de programme pouvant être traitées par un processeur, les données de programme sont adaptées à un système d'exploitation ou un processeur du terminal de radiotéléphonie mobile (32), les données de programme étant sélectionnées selon un type de terminal de radiotéléphonie mobile et des programmes de sabotage et/ou des données de sabotage nuisibles étant filtrés dans les données à transmettre (38).

10. Procédé de transmission pour un réseau de radiotéléphonie mobile (20) destiné à transmettre des données (38) entre un fournisseur de données et un utilisateur (42) selon la revendication 9, **caractérisé en ce que** les données de personnalisation sont attachées aux données à transmettre (38).

11. Procédé de transmission pour un réseau de radiotéléphonie mobile (20) destiné à transmettre des données (38) entre un fournisseur de données et un utilisateur (42) selon l'une quelconque des revendications 9 à 10, **caractérisé en ce que** les données à transmettre (38) sont transmises aussi bien vers le terminal de radiotéléphonie mobile que vers l'unité de traitement de données du fournisseur de données.

12. Procédé de transmission pour un réseau de radiotéléphonie mobile (20) destiné à transmettre des données (38) entre un fournisseur de données et un utilisateur (42) selon l'une quelconque des revendications 9 à 11, **caractérisé en ce que** l'unité de traitement de données (17) du fournisseur de données est connectée à l'unité de traitement de données (11) du système de transmission (10) par l'intermédiaire d'un réseau (14), notamment internet.

13. Procédé de transmission pour un réseau de radiotéléphonie mobile (20) destiné à transmettre des données (38) entre un fournisseur de données et un utilisateur (42) selon la revendication 11, **caractérisé en ce que** les données à transmettre (38) sont adaptées en fonction du profil.

14. Procédé de transmission pour un réseau de radiotéléphonie mobile (20) destiné à transmettre des données (38) entre un fournisseur de données et un utilisateur (42) selon l'une quelconque des revendication 9 à 13, **caractérisé en ce que** l'unité de traitement de données (11) du système de transmission (10) ne transmet que les données demandées (32).

15. Procédé de transmission pour un réseau de radiotéléphonie mobile (20) destiné à transmettre des données (38) entre un fournisseur de données et un utilisateur (42) selon l'une quelconque des revendication 9 à 14, **caractérisé en ce que** l'unité de traitement de données (11) du système de transmission (10) ne continue de transmettre que les données vérifiées (44) .

16. Procédé de transmission pour un réseau de radiotéléphonie mobile (20) destiné à transmettre des données (38) entre un fournisseur de données et un utilisateur (42) selon l'une quelconque des revendications 9 à 15, **caractérisé en ce que** les frais de transmission et/ou de vérification des données à transmettre (38, 44) sont saisis et facturés par l'unité de traitement de données (11) du système de transmission (10).
